# EUROPÄISCHE PATENTSCHRIFT

(11) **EP 1 376 079 B1**
(45) Veröffentlichungstag und Bekanntmachung des Hinweises auf die Patenterteilung: **15.02.2012**
(21) Anmeldenummer: 03011292.4
(22) Anmeldetag: 17.05.2003
(51) Int. Cl.: G01V 1/00, G01H 3/00, B63G 8/39, B63G 9/02

(54) **Verfahren zum Detektieren von luftverbrachten Unterwasserlaufkörpern**
Method for detecting air-delivered underwater bodies
Procédé pour le détection de corps sous-marins immergés depuis l'air

(30) Priorität: 27.06.2002 DE 10228681
(43) Veröffentlichungstag der Anmeldung: 02.01.2004
(73) Patentinhaber: ATLAS ELEKTRONIK GMBH, 28305 Bremen (DE)
(72) Erfinder: Bülow, Heiko, 28355 Bremen (DE); Wicker, Kai, Dr., 28357 Bremen (DE); Neumeister, Dirk, Dr., 28309 Bremen (DE)
(74) Vertreter: Wasiljeff, Johannes M.B.

(56) Entgegenhaltungen:
- EP-A- 0 535 570
- DE-A1- 4 220 429
- DE-C1- 10 128 973
- US-A- 4 604 610
- US-A- 5 563 580
- US-A- 5 959 534
- AUSTIN JOSEPH: "Modern Torpedoes and countermeasures" Bd. 3(4), 17. Januar 2001 (2001-01-17), Seiten 1-10, XP002475370 Gefunden im Internet: URL:http://www.bharat-rakshak.com/MONITOR/ ISSUE3-4/joseph.html>
- DATABASE COMPENDEX [Online] ENGINEERING INFORMATION, INC., NEW YORK, NY, US; SHI SHENG-GUO ET AL: "Experimental investigation of the splash sound of low-speed body water entry" XP002475240 Database accession no. E2005149025592 & HARBIN GONGCHENG DAXUE XUEBAO; HARBIN GONGCHENG DAXUE XUEBAO/JOURNAL OF HARBIN ENGINEERING UNIVERSITY DECEMBER 2004, Bd. 25, Nr. SUPPL., Dezember 2004 (2004-12), Seiten 99-102,

## Beschreibung

Die Erfindung betrifft ein Verfahren zum Detektieren von luftverbrachten Unterwasserlaufkörpern, die nach Zurücklegen einer Flug- und/oder Fallstrecke in Luft ins Wasser eintauchen, insbesondere von Leichtgewichtstorpedos, der im Oberbegriff des Anspruchs 1 definierten Gattung.

Die Bedrohung von Schiffen, insbesondere von U-Booten, durch Torpedos ist immer noch ein gravierendes Problem in der Seekriegsführung. Zwar hat man verschiedene, effiziente Maßnahmen, wie das Aussetzen von Störern und Täuschern zum Ablenken eines anlaufenden Torpedos oder das Entgegenschießen von Anti-Torpedo-Torpedos, entwickelt, doch setzt deren erfolgversprechender Einsatz eine Früherkennung eines anlaufenden Torpedos voraus, um rechtzeitig die Abwehrmittel ausbringen zu können.

Bei einem bekannten Verfahren zur Abwehr eines anlaufenden Torpedos (DE 199 35 436 A1) wird ein ziellaufender Torpedo mittels eines bordgestützen Aktivsonars durch Rundumpeilung erfaßt. Das Aktivsonar ist dabei in der Lage, die Schiffsumgebung rundum bis auf eine achterliche Lücke abzudecken, die aufgrund von Abschattungen durch Schiffsaufbauten, wie den Turm eines U-Boots, entsteht. Um die achterliche Lücke zu schließen, wird von dem einer Torpedobedrohung ausgesetzten Schiff ein sog. Schleppsonar oder towed array nachgeschleppt, mit dem ein sich im achterlichen Bereich dem Schiff nähernder Torpedo passiv gepeilt werden kann. Die Peilung erfolgt in bekannter Weise durch richtungsselektiven Empfang des Torpedogeräusches und Ermittlung eines Amplituden- oder Leistungsmaximums im Empfangssignal des Schleppsonars.

Da im zunehmenden Maße die Zieldaten zum Einsatz eines Torpedos im niederfrequenten Schallbereich passiv gewonnen werden und andererseits die Torpedos schneller und leiser geworden sind, wird häufig ein anlaufender Torpedo vom Ziel erst spät erkannt, wenn er sich diesem schon bis auf wenige hundert Meter genähert hat, so daß dem Ziel extrem wenig Zeit für die Einleitung von Abwehrmaßnahmen verbleibt. Insbesondere Leichtgewichtstorpedos werden nach Orten des Ziels in unmittelbarer Nähe des Ziels durch Hubschrauber oder Flugzeuge abgeworfen oder von einem diese Torpedos führenden Schiff in den Nahbereich des Ziels hineingeschossen. Mit den beschriebenen, herkömmlichen Mitteln können solche Torpedos erst dann erkannt werden, wenn nach ihrem Eintauchen in das Wasser ihr Antriebsaggregat aktiviert oder in den Fällen, in denen sie mit einem Aktivsonar zum akustischen Orten des Ziels ausgestattet sind, das Aktivsonar die ersten Schallimpulse aussendet. Dann ist aber bereits die Distanz zwischen dem schnellaufenden Torpedo und dem angegriffenen Schiff so kurz, daß nicht genügend Zeit für einen effektiven Einsatz der Abwehrmittel, insbesondere des erfolgreichen Abschießens eines Anti-Torpedo-Torpedos, verbleibt.

Bei einem bekannten Verfahren zur Abwehr eines Torpedos (AUSTIN Joseph: "Modern Torpedos and countermeasures", Bd. 3(4) 17. Januar 2011 (2001-01-17) Seiten 1 -10, XP 062475370) detektiert ein getauchtes U-Boot mittels eines Passivsonars ein Platschgeräusch (splash) in seiner Umgebung, das beim Eintauchen eines von einer Luftplattform, wie einem Helikopter, in der Nähe des U-Boots abgesetzten Leichtgewichttorpedos ins Wasser erzeugt wird. Über Art und Weise der Detektion dieses Platschgeräusches in dem Empfangssignalen des Passivsonars ist nichts beschrieben.

Bei einem bekannten Verfahren zur Detektion eines vorübergehenden, sog. transienten Geräusches unter Wasser in Anwesenheit eines Hintergrundgeräusches (EP 0 535 570 A) werden die von einer passiven Sensoranordnung über die Zeit empfangenen akustischen Daten in Zeitsegmente, sog. Fenster, aufgeteilt. Für jedes Zeitsegment wird eine Kurzzeitkorrelationsfunktion berechnet und durch Mittelwertbildung aller Kurzzeitkorrelationsfunktionen das Hintergrundrauschen abgeschätzt. Der Mittelwert wird von der Korrelationsfunktion subtrahiert und die durchschnittliche Kovarianz des verbleibenden Rests bestimmt. Bei Empfang von neuen akustischen Daten werden Variationen der Kovarianz gemessen. Auf das Vorliegen eines transienten Ereignisses wird geschlossen, wenn die Kovarianz einen vorgegebenen Schwellwert übersteigt.

Ein bekanntes Sicherheitssystem für einen Swimmingpool (US 5,563,580 A) weist einen sog. Splash-Detektor auf, der Vibrationen im Wasser detektiert und Alarm auslöst.

Bei einer bekannten experimentalen Untersuchung in einem Wassertank (Shi Sheng-Guo et al: "Experimental investigation of the splash sound of low-speed body water entry", Database accession no. E2005149025592; & Harbin Gongcheng Daxue Xuebao; Harbin Gongcheng Dacue Cuebao/Journal of Harbin Engineering Univerity December 2004, Bd. 26, Nr. Suppl., Dezember 2004 (2004-12); Seiten 99 - 102) wird das akustische Geräusch, das beim Fallen eines Körpers ins Wasser entsteht, mittels eines Druck-Hydrophons und eines Vektor-Hydrophons gemessen. Eine Basisanalyse wird durchgeführt, um die Zusammenhänge zwischen Stärke des Aufschlags und dem Eintrittswinkel sowie die Charakteristik des Spektrums des Aufschlags und der erzeugten Rauschpulse zu erkennen. Das Experiment dient dazu, die Charakteristiken des Platschgeräusches (splashing sound), das beim Eintauchen eines Torpedos ins Wasser entsteht, zu verstehen.

Ein bekanntes Swimmingpool-Alarmsystem (US 4,604,610 A) hat ein über der Wasseroberfläche angeordnetes Hydrophon und einen mit dem Hydrophon verbunden captiven Sensor, der vertikale Wellenbewegungen des Wassers, die das Hydrophon beaufschlagen, misst. Das Hydrophon ist mit einem Vorverstärker und einem Peakdetektor verbunden. Übersteigt das Ausgangssignal des Peakdetektors einen Schwellwert, so wird Alarm erzeugt, der entweder auf einen hohen Level eines Audiosignals, das das Hydrophon beaufschlagt, oder auf eine Wasserturbulenz im Swimmingpool zurückzuführen ist.

Bei einem bekannten Verfahren zur Detektion eines propellerbetriebenen Fahrzeugs (DE 42 20 429 A1) werden mit dem DEMON-Verfahren Frequenzen und deren Harmonische von Spektrallinien der Hüllkurve eines empfangenen, bandbegrenzten, demodulierten Geräusches ermittelt. Um auch bei schlechtem Nutz/Störverhältnis eine Aussage über die Glaubwürdigkeit des Ergebnisses zu erhalten, werden Fuzzy-Logiken verwendet. Das Verfahren wird zur Detektion von Schiffen, U-Booten und Hubschraubern eingesetzt.

Ein bekanntes U-Boot (DE 101 28 973 C1) weist zur Erkennung von aktiv ortenden Torpedos eine Vielzahl von omnidirektional empfangenden Hydrophonen sowie eine Signalverarbeitungseinheit zur Bestimmung von Torpedodaten aus den Ausgangssignalen der Hydrophone auf. Die Hydrophone sind über die Oberfläche des U-Boots beliebig verteilt und direkt auf der Außenhaut des U-Boots befestigt.

Bei einem bekannten Verfahren zur Detektion des Eintritts eines Objekts ins Wasser (US 5,959,534 A) wird die Frequenz oder der Frequenzbereich der Schallwellen bestimmt, die beim Eintritt des Objekts ins Wasser erzeugt werden. Dann werden die zur Frequenz zugehörigen Schallwellen detektiert und ein elektrisches Signal, das repräsentativ für die Amplitude der Schallwellen ist, erzeugt. Ein Alarm wird generiert, wenn die Amplitude des elektrischen Signals einen vorgegebenen Wert in einer vorgegebenen Zeitperiode übersteigt.

Der Erfindung liegt die Aufgabe zugrunde, ein Verfahren der eingangs genannten Art anzugeben, das eine Früherkennung von Unterwasserlaufkörpern, wie Torpedos oder Unterwasserprojektile mit Raketenantrieb, ermöglicht, und zwar noch bevor sie ihren Zielanlauf aufgenommen haben.

Die Aufgabe wird erfindungsgemäß durch die Merkmale im Anspruch 1 gelöst.

Das erfindungsgemäße Verfahren hat den Vorteil, den Unterwasserlaufkörper schon bei dessen Eintauchen ins Wasser zu erkennen, so daß nicht erst abgewartet werden muß, bis der Unterwasserlaufkörper durch Einschalten seines Antriebs oder Aktivieren seines Ortungssonars selbst Schall breitbandig oder schmalbandig aussendet. Da z.B. je nach Typ eines Leichtgewichtstorpedos etwa 5 - 20 sek vergehen, bis die Antriebsbatterie nach Eintauchen des Torpedos ins Wasser die Energie für den Torpedoantrieb liefern kann, wird mit dem erfindungsgemäßen Verfahren der Torpedo sehr viel früher detektiert als bei den bekannten Detektionsverfahren. Eine Torpedowarnung kann damit um diese nicht unerhebliche Zeitspanne früher ausgegeben und auch bereits eine Angabe über die Anlaufrichtung des Torpedos zur Verfügung gestellt werden, so daß die Abwehrmaßnahmen frühzeitig eingeleitet werden können, was die Chancen zur Täuschung oder Vernichtung des Torpedos wesentlich verbessert.

Die diskrete Wavelet-Analyse liefert hierzu vorteilhaft eine Auflösung des Empfangssignals gleichzeitig in Zeit und Frequenz gibt also an, welche Frequenzen des Empfangssignals zu einer speziellen Zeit dominieren, und erlaubt dadurch die Prüfung des Empfangssignals in verschiedenen Graden von Details. Das Wavelet kann sehr gut an das im Empfangssignal zu detektierende Ereignis angepaßt werden. Wird die Skalierung des Wavelets entsprechend gewählt, so können Kurzzeit-Ereignisse im Empfangssignal, die hohe Frequenzkomponenten enthalten, wie das Platschgeräusch des eintauchenden Torpedos, analysiert werden.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer bevorzugten Ausführungsform der Erfindung wird zur Wavelet-Analyse das Empfangssignal zeitabschnittsweise in mehreren aufeinanderfolgenden Transformationsstufen jeweils einer diskreten Wavelet-Transformation unterzogen und aus den in allen Transformationsstufen erhaltenen Wavelet-Transformierten eine zeitabhängige Produktfunktion gebildet. Die Produktfunktion wird mit einer Schwelle verglichen, und bei Überschreiten der Schwelle an einer Zeitstelle der Produktfunktion wird auf Detektion des Platschgeräusches erkannt, so daß zu diesem Zeitpunkt eine Warnung bezüglich des Angriffs durch einen Unterwasserlaufkörper ausgegeben werden kann.

Um die Falschalarmrate zu reduzieren, wird gemäß einer vorteilhaften Ausführungsform der Erfindung im Empfangssignal zusätzlich ein vom Unterwasserlaufkörper nach Starten seines Antriebsaggregats abgestrahltes Antriebsgeräusch und/oder ein von einem akustischen Ortungssonar des Unterwasserlaufkörpers ausgesendeter Schallimpuls detektiert und auf Plausibilität mit dem detektierten Platschgeräusch geprüft. Führt die Plausibilitätsprüfung zu einer Bestätigung der Torpdodetektion durch die Wavlet-Analyse, so werden die Torpedoabwehrmittel aktiviert. Durch die aufgrund des detektierten Platschgeräusches ausgegebene Vorwarnung sind zu diesem Zeitpunkt die Abwehrmittel aber bereits soweit eingerichtet, daß ihr Abschuß ohne weitere Zeitverzögerung erfolgen kann.

Gemäß einer vorteilhaften Ausführungsform der Erfindung wird als elektroakustischer Wandler ein onmidirektionales Hydrophon verwendet, das seine Umgebung rundum überwacht und damit das Eintauchen eines Unterwasserlaufkörpers im Überwachungsbereich erkennt.

Bei einer bevorzugten Ausführungsform der Erfindung wird als elektroakustischer Wandler eine Hydrofonanordnung, ein sog. Hydrofonarray, mit richtungsselektiven Empfangscharakteristiken verwendet. Aufgrund der Empfangscharakteristiken des Hydrofonarrays kann der Empfangssektor oder Empfangsbeam angegeben werden, in dessen Empfangssignal das Platschgeräusch detektiert wird. Der Richtungswinkel des Empfangsbeams gibt die Peilung zum Unterwasserlaufkörper an, so daß dessen Anlaufrichtung bestimmt werden kann.

Die Erfindung ist anhand eines in der Zeichnung illustrierten Ausführungsbeispiels im folgenden näher beschrieben. Es zeigen.
- Fig. 1: ein Blockschaltbild einer Schaltungsanordnung zur Erläuterung des Detektionsverfahrens für luftverbrachte Unterwasserlaufkörper,
- Fig. 2: Beispiele für im Waveletspeicher in Fig. 1 abgespeicherte Wavelets,
- Fig. 3: Diagramme eines Empfangssignals und von mehreren, aus Wavelet-Transformationen in vier Transformationsstufen hervorgehenden Details-Zeitsignalen,
- Fig. 4: ein Diagramm einer zeitabhängigen Produktfunktion aus den in den Transformationsstufen erhaltenen Details-Zeitsignalen.

Das nachfolgend beschriebene Verfahren dient zum Detektieren von luftverbrachten Unterwasserlaufkörpern, die von einem Hubschrauber oder einem Flugzeug aus abgeworfen oder von einem Oberflächenschiff aus abgeschossen werden und nach Zurücklegen einer Fall- bzw. Flugstrecke in Luft ins Wasser eintauchen. Ein Beispiel für einen solchen Unterwasserlaufkörper ist ein Leichtgewichtstorpedo oder ein Unterwasserprojektil mit Raketenantrieb. Solche Unterwasserlaufkörper werden in einer solchen Weise luftverbracht, daß sie in unmittelbarer Nähe des Ziels, meist in einer Entfernung von weniger als einem Kilometer vom Ziel, ins Wasser eintauchen, eine kurze Zeit nach Eintauchen ihren Antrieb einschalten und dann Zielfahrt aufnehmen. Zugleich wird ein Ortungssonar aktiviert, mit welchem das Ziel aktiv geortet und der Unterwasserlaufkörper ins Ziel gelenkt wird. Das nachstehend beschriebene Verfahren ermöglicht dem Ziel, einen solchen luftverbrachten Unterwasserlaufkörper sehr frühzeitig zu erkennen, so daß trotz der hohen Laufgeschwindigkeit des Unterwasserlaufkörpers genügend Zeit zur Verfügung steht, geeignete Abwehrmittel zur Täuschung (Softkill) oder Bekämpfung (Hardkill) zum Einsatz zu bringen. Im ersten Fall werden Störer und Täuschkörper ausgesetzt, die einerseits das Ortungssonar des Unterwasserlaufkörpers stören, so daß sich das Ziel im Schutze dieser Störer aus der georteten Position wegbewegen kann, und andererseits den Unterwasserlaufkörper nach Abschalten des Störers auf die an anderer Position sich befindlichen Täuschkörper lenken. Im zweiten Fall werden sog. Anti-Torpedo-Torpedos vom Ziel abgeschossen, die dem angreifenden Unterwasserlaufkörper entgegenlaufen und diesen mittels Sprengladung vernichten.

Zur Durchführung des Detektionsverfahrens verfügt das Ziel, z.B. ein U-Boot, über einen elektroakustischen Empfänger, der die Wasserumgebung rings um das Ziel auf Schalleinfall überwacht. Der Empfänger kann ein einzelnes omnidirektionales Hydrofon sein, wenn das Verfahren ausschließlich zur Detektion angewendet werden soll. Soll neben der bloßen Detektion auch die Peilung zum Unterwasserlaufkörper, also die Anlaufrichtung des Unterwasserlaufkörpers, festgestellt werden, so wird als elektroakustischer Empfänger 10 eine Hydrofonanordnung, ein sog. Hydrofonarray, mit richtungsselektiven Empfangscharakteristiken eingesetzt. Eine solche Hydrofonanordnung kann eine am Bug eines U-Boots angeordnete Zylinderbasis eines Passivpanoramasonars, eine an den Längsseiten des U-Boots installierte Linearantenne, ein sog. Flank-Array, eine der Außenkontur des U-Boots folgende Wandleranordnung, ein sog. Conformal-Array, oder eine sog. Interceptbasis, wie sie in der DE 196 12 503 C2 beschrieben ist, sein. Um auch Unterwasserlaufkörper, die steil von oben anlaufen, detektieren zu können, wird auch eine sog. IDRS-Basis verwendet, bei welcher die Hydrofone über die Oberfläche des Bootskörpers beliebig verteilt und direkt auf dessen Außenhaut befestigt sind.

Im Ausführungsbeispiel ist der elektroakustische Empfänger 10 als Linearantenne mit einer Vielzahl von äquidistant aneinandergereihten Hydrofonen 11 ausgeführt. Zur Bildung der richtungsselektiven Empfangscharakteristiken werden in Horizontalrichtung lückenlos nebeneinanderliegende Empfangssektoren, sog. Beams, mit einer Hauptachse größter Empfangsempfindlichkeit aufgespannt, über die ins Wasser abgestrahlter Schall richtungsselektiv empfangen wird. Hierzu sind die Hydrofone 11 in bekannter Weise mit einem Richtungsbildner 12 verbunden, in dem die Ausgangssignale der Hydrofone 11 zeit- oder phasenverzögert werden, und zwar derart, daß unter Berücksichtigung einer gewünschten Empfangsrichtung, die der Hauptachse eines Empfangssektors entspricht, alle Ausgangssignale konphas sind. Die entsprechenden Verzögerungszeiten τ₁ werden in einem Verzögerungszeitrechner 13 in Abhängigkeit von einem diesen zugeführten Empfangsrichtungs- oder Peilwinkel Θⱼ generiert. Im Richtungsbildner 12 werden die für jeden Peilwinkel Θⱼ gebildeten konphasen Ausgangssignale der Hydrofone 11 zu einem Gruppensignal addiert, im folgenden Empfangssignal genannt, das einer nachfolgend beschriebenen Signalverarbeitung unterzogen wird.

Wird anstelle des Hydrofonarray ein omnidirektionales Hydrofon verwendet, so entfällt der Richtungsbildner 12 mit Verzögerungszeitrechner 13, und das elektrische Ausgangssignal des Hydrofons 11, ebenfalls als Empfangssignal bezeichnet, wird unmittelbar der Signalverarbeitung unterzogen.

Die nachfolgend beschriebene Signalverarbeitung der Empfangssignale ist speziell auf die Detektion eines Signalanteils im Empfangssignal abgestellt, das auf das beim Eintauchen des Unterwasserlaufkörpers in das Wasser erzeugten Platschgeräusch, im folgenden kurz "Splash" genannt, zurückgeht. Dabei wird das Empfangssignal zeitabschnittsweise ausgewertet und hierzu in aufeinanderfolgende Zeitabschnitte aufgeteilt. Jeder Zeitabschnitt wird mehrfach einer diskreten Wavelet-Transformation unterzogen, wobei in mehreren, aufeinanderfolgenden Transformationsstufen, sog. Levels, Wavelet-Transformierte erhalten werden. Aus den Wavelet-Transformierten in allen Transformationsstufen (Levels) wird eine zeitabhängige Produktfunktion gebildet, und die zeitabhängige Produktfunktion wird mit einer Schwelle verglichen. Wird die Schwelle durch die Produktfunktion an einer Zeitstelle überschritten, so wird dies als Splash-Detektion gewertet und akustisch und/oder visuell als Warnung vor einem bevorstehenden Angriff eines Unterwasserlaufkörpers, z.B. eines Torpedos oder eines raketengetriebenen Unterwasserprojektils, angezeigt. Da üblicherweise der Antrieb des Unterwasserlaufkörpers typabhängig ca. 5 - 20 sek nach dem den Splash auslösenden Eintauchen des Unterwasserlaufkörpers in das Wasser eingeschaltet wird und dann erst der Unterwasserlaufkörper seine zielgerichtete Fahrt aufnimmt, steht diese Zeit zusätzlich zu der Laufzeit des Unterwasserlaufkörpers bis zur Erreichung eines Minimalabstandes zum Ziel, bei dem noch wirksam Abwehrmittel vom Ziel eingesetzt werden können, zur Verfügung, um die Abwehrmittel früh genug für eine effektive Abwehr oder Zerstörung des anlaufenden Unterwasserlaufkörpers auszubringen.

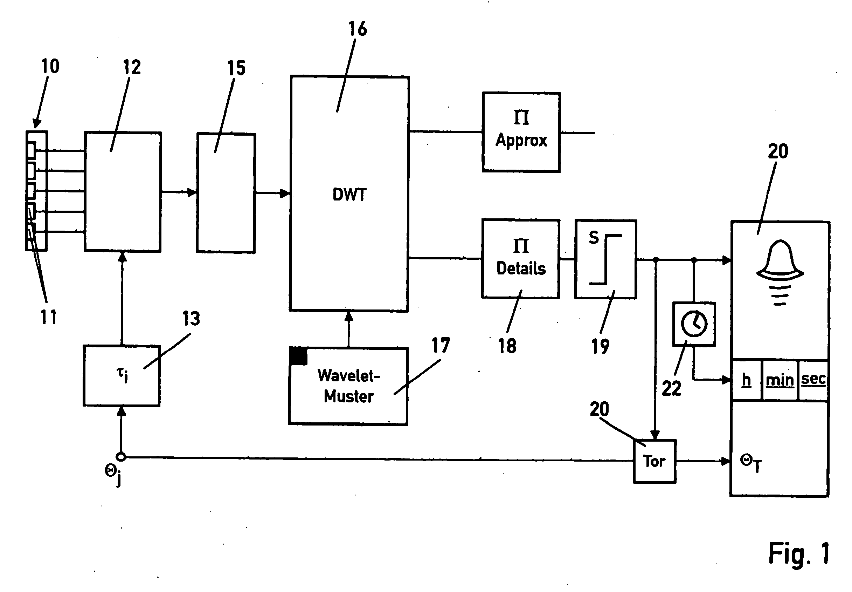

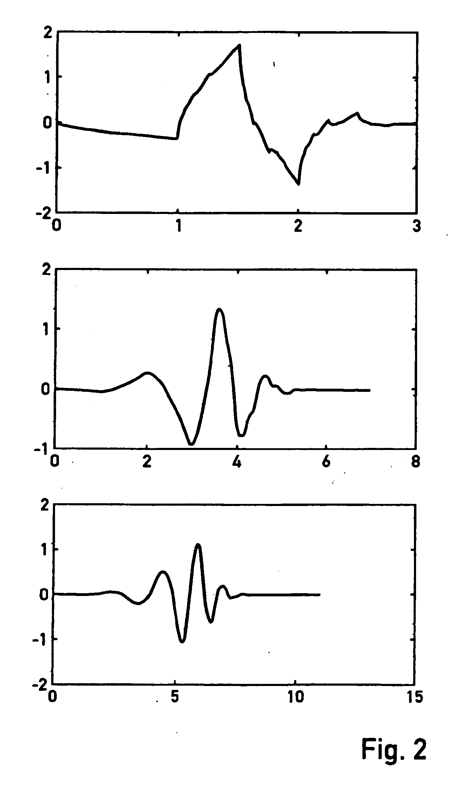

Zur Illustrierung des Verfahrens ist die Signalverarbeitung in Fig. 1 in einzelne Funktionsblöcke unterteilt. Im Funktionsblock 15 werden Zeitabschnitte des Empfangssignals gebildet, die nacheinander in dem Funktionsblock 16 einer digitalen Wavelet-Transformation unterzogen werden. In einem Speicher 17 für Muster-Wavelets ist eine Mehrzahl verschiedener Wavelets abgespeichert, von denen ein für die Splash-Detektion besonders geeignetes ausgewählt und dem Funktionsblock 16 zugeführt wird. Die abgespeicherten Wavelets sind an eine Detektion der von bekannten Unterwasserlaufkörpern typbedingt und je nach Fallhöhe, Gewicht und Eintauchgeschwindigkeit ausgelösten, unterschiedlichen Splash angepaßt. Wird der Einsatz verschiedener Unterwasserlaufkörper vermutet, so können für die verschiedenen Unterwasserlaufkörper optimierte Wavelets in paralleler oder aufeinanderfolgender Wavelet-Analyse verwendet werden. Beispiele für mögliche, abgespeicherte Wavelets sind in Fig. 2 dargestellt. Fig. 2 zeigt in den Diagrammen von oben nach unten ein Daubechies-Wavelet zweiter, vierter und sechster Ordnung. Ein weiteres Beispiel für ein Wavelet wäre das sog. Mexican-Hat-Wavelet. Andere Wavelets sind ebenfalls einsetzbar.

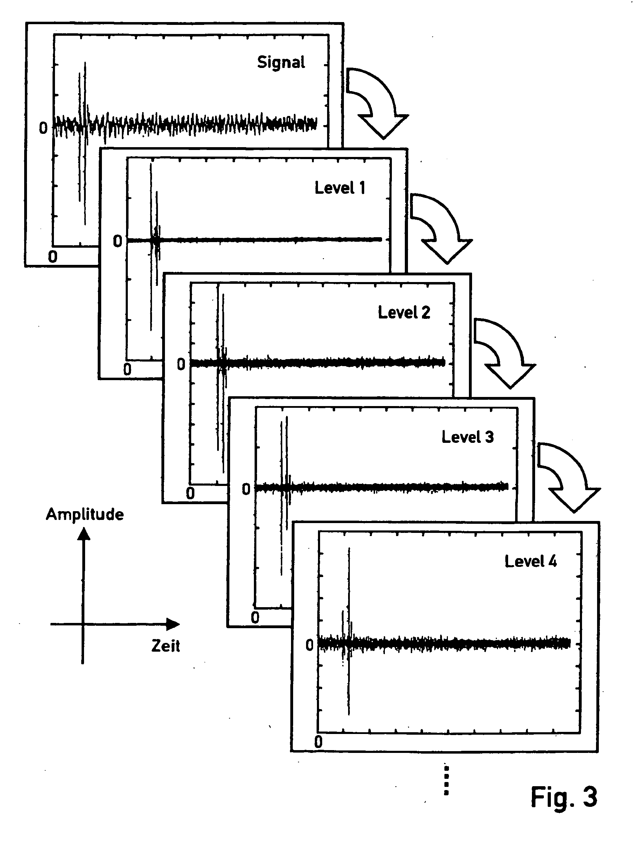

In Fig. 3 ist die im Funktionsblock 16 durchgeführte Wavelet-Analyse bildlich dargestellt. Das obere Diagramm zeigt beispielhaft ein Empfangssignal, das neben Hintergrundrauschen einen von einem Splash herrührenden Signalanteil enthält. Zunächst wird das Empfangssignal mit einem aus dem Speicher 17 ausgewählten Wavelet mit dem Skalierungsfaktor a=1, im Ausführungsbeispiels dem Daubechies-Wavelet zweiter Ordnung (oberes Diagramm in Fig. 2), einer Wavelet-Transformation unterzogen. Bei der Wavelet-Transformation entstehen als Wavelet-Transformierte ein sog. Approximation-Zeitsignal, das globale Informationen des Empfangssignals enthält, und ein sog. Details-Zeitsignal, das detaillierte Informationen des Empfangssignals enthält.

In Fig. 3 ist von den beiden durch die Wavelet-Transformation des Empfangssignals in der ersten Transformationsstufe (Level 1) erhaltenen Wavelet-Transformierten lediglich das Details-Zeitsignal dargestellt. Auf dieses Details-Zeitsignal der ersten Transformationsstufe oder des "Level 1" wird wiederum eine Wavelet-Transformation mit dem gleichen Wavelet durchgeführt, dessen Skalierungsfaktor aber jetzt a=2 beträgt. Von den dabei erhaltenen beiden Wavelet-Transformierten der zweiten Transformationsstufe (Level 2) ist in Fig. 3 wiederum nur das Details-Zeitsignal der zweiten Transformationsstufe oder des "Level 2" dargestellt. Dieser Vorgang wird weiter fortgesetzt bis eine geeignete Anzahl von Details-Zeitsignalen aus aufeinanderfolgenden Transformationsstufen vorhanden sind. Die Zahl der durchgeführten Transformationen zur Erlangung eines guten Detektionsergebnisses hängt von dem Nutz-/Störverhältnis (Signal-Noise-Ratio, SNR) des Empfangssginals ab. Bei jeder der aufeinanderfolgenden Transformationen wird der Skalierungsfaktor des verwendeten Wavelets immer verdoppelt, also auf 4, 8, 16... vergrößert. In Fig. 3 sind die Details-Zeitsignale aus insgesamt vier Transformationsstufen dargestellt. Es können jedoch auch noch weitere nachfolgende Wavelet-Transformationen vorgenommen werden, wobei bei n durchgeführten Transformationen der Skalierungsfaktor des Wavelets bei der n-ten Transformation, die zu den Details-Zeitsignalen der n-ten Transformationsstufe (Level n) führt, a=2ⁿ⁻¹ beträgt. Die Zunahme des Skalierungsfaktors bedeutet eine zeitliche Dehnung des Wavelets.

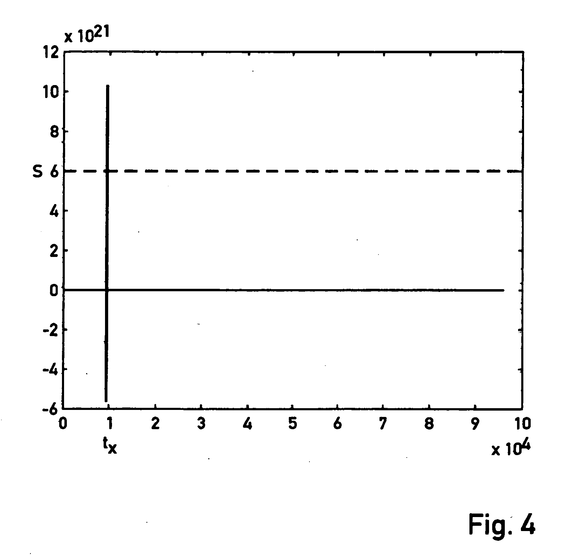

Die so erhaltenen Details-Zeitsignale in allen Transformationsstufen werden in dem Funktionsblock 18 punktweise multipliziert und so eine zeitabhängige Produktfunktion über alle Details-Zeitsignale erhalten. Diese Produktfunktion ist im Diagramm der Fig. 4 dargestellt. Durch die Multiplikation der Details-Zeitsignale verstärken sich in der Produktfunktion die korrelierenden Signalanteile in den Wavelet-Transformierten, während das unkorrelierte Rauschen im Mittel Null wird. Die Produktfunktion wird im Funktionsblock 19 mit einer Schwelle verglichen. Übersteigt die Produktfunktion an einer Zeitstelle die Schwelle S, wie dies bei der Produktfunktion gemäß Fig. 4 im Zeitpunkt tₓ der Fall ist, so tritt am Ausgang des Vergleicher-Funktionsblocks 19 ein Signal auf, das einerseits einer Anzeigeeinheit 20 zugeführt wird und dort eine Torpedowarnung auslöst und andererseits ein Tor 21 aufsteuert. Am Tor 21 liegt der jeweils eingestellte Peilwinkel Θⱼ an, unter dem das momentan der Signalverarbeitung unterzogene Empfangssignal empfangen wird. Wird von dem Ausgangssignal des Vergleicher-Funktionsblocks 19 das Tor 21 geöffnet, so wird der momentane Peilwinkel der Anzeigeeinheit 20 zugeführt und dort als die die Anlaufrichtung des Unterwasserlaufkörpers angebende Peilung Θ_{UK} angezeigt. Darüber hinaus aktiviert das Ausgangssignal des Vergleicher-Funktionsblocks 19 einen Zeitmesser 22 in der Weise, daß dieser die momentane Zeit an die Anzeigeeinheit 20 ausgibt, somit der Zeitpunkt der Detektion des Unterwasserlaufkörpers in der Anzeigeeinheit 20 sichtbar wird.

Die beschriebene Wavelet-Analyse auf Basis des aus dem Empfangssignal abgeleiteten Details-Zeitsignals kann in gleicher Weise auch mit dem Approximation-Zeitsignal durchgeführt werden. Auch in diesem Fall wird dann die Produktfunktion über die in jeder Transformationsstufe erhaltenen Approximation-Zeitsignale gebildet und die Produktfunktion mit einer Schwelle verglichen. Ein an der Schwelle auftretendes Ausgangssignal wird dann in gleicher Weise der Anzeigeeinheit 20, dem Tor 21 und dem Zeitmesser 22 zugeführt. Auf eine Darstellung dieses Signalzweigs ist in Fig. 1 verzichtet und lediglich der dem Funktionsblock 18 entsprechende Funktionsblock für die Produktbildung über die Approximation-Zeitsignale angedeutet.

Es ist auch möglich, den beschriebenen Vorgang der Produktbildung für beide Wavelet-Transformierten über alle Transformationsstufen durchzuführen, d.h. sowohl mit den Details-Zeitsignalen als auch mit den Approximation-Zeitsignalen, und die Ausgangssignale an den beiden Vergleicher-Funktionsblöcken vor der Ansteuerung von Anzeigeeinheit 20, Tor 21 und Zeitmesser 22 auf Plausibilität zu prüfen. Nur wenn das Plausibilitätskriterium erfüllt wird, werden die genannten Funktionsglieder angesteuert.

Zur Reduzierung der Falschalarmrate werden durch eine entsprechende Signalverarbeitung des Empfangssignals zu einem späteren Zeitpunkt, nach dem der detektierte Unterwasserlaufkörper sein Antriebsaggregat gestartet und ggf. sein Ortungssonar in Tätigkeit versetzt hat, noch zusätzlich Signalanteile im Empfangssignal detektiert, die vom abgestrahlten Antriebsgeräusch des Unterwasserlaufkörpers herrühren oder die vom Ortungssonar des Unterwasserlaufkörpers ausgesendeten Schallimpulse darstellen. Diese Detektionen werden mit herkömmlichen, bekannten Methoden durchgeführt. Dadurch gewinnt man weitere Detektionen des Unterwasserlaufkörpers, und durch eine Plausibilitätsprüfung kann die Effizienz der Torpedoabwehr verbessert werden.

## Patentansprüche

1. Verfahren zum Detektieren von luftverbrachten Unterwasserlaufkörpem, die nach Zurücklegen einer Flug- und/oder Fallstrecke in Luft ins Wasser eintauchen, insbesondere von Leichtgewichtstorpedos, bei dem die Empfangssignale eines zur Überwachung seiner Umgebung ins Wasser eingesetzten, elektroakustischen Empfängers (10) einer auf die Detektion eines durch das Eintauchen des Unterwasserlaufkörpers erzeugten Platschgeräusches (Splash) abgestellten Signalverarbeitung unterzogen werden, **dadurch gekennzeichnet, daß** bei der Signalverarbeitung Mittel der diskreten Wavelet-Analyse eingesetzt werden.

2. Verfahren nach Anspruch 1, **dadurch gekennzeichnet, daß** das Empfangssignal in Zeitabschnitten aufgeteilt und jeder Zeitabschnitt in mehreren, aufeinanderfolgenden Transformationsstufen einer diskreten Wavelet-Transformation unterzogen wird, daß aus den in allen Transformationsstufen erhaltenen Wavelet-Transformierten eine zeitabhängige Produktfunktion gebildet wird und daß die zeitabhängige Produktfunktion mit einer Schwelle (S) verglichen und bei deren Überschreitung auf Detektion des Platschgeräusches erkannt wird.

3. Verfahren nach Anspruch 2, **dadurch gekennzeichnet, daß** in jeder Transformationsstufe als Wavelet-Transformierten ein globale Information enthaltendes Approximation-Zeitsignal und ein detaillierte Informationen enthaltendes Details-Zeitsignal erhalten werden und daß die diskrete Wavelet-Transformation in der ersten Transformationsstufe auf das Empfangssignal und in jeder folgenden Transformationsstufe auf das Details-Zeitsignal und/oder auf das Approximation-Zeitsignal aus der jeweils vorherigen Transformationsstufe angewendet wird.

4. Verfahren nach Anspruch 3, **dadurch gekennzeichnet, daß** zur Bildung der zeitabhängigen Produktfunktion der Wavelet-Transformierten jeweils die Details-Zeitsignale und/oder die Approximation-Zeitsignale aus allen Transformationsstufen punktweise miteinander multipliziert werden.

5. Verfahren nach einem der Ansprüche 2 bis 4, **dadurch gekennzeichnet, daß** bei den aufeinanderfolgenden Wavelet-Transformationen das gleiche Wavelet mit zunehmendem Skalierungsfaktor verwendet wird.

6. Verfahren nach Anspruch 5, **dadurch gekennzeichnet, daß** der Skalierungsfaktors des Wavelets bei jeder nachfolgenden Transformation verdoppelt wird.

7. Verfahren nach einem der Ansprüche 2 bis 6, **dadurch gekennzeichnet, daß** für die Wavelet-Transformation eine Vielzahl von Muster-Wavelets vorgehalten werden, die speziell auf die Detektion der Platschgeräusche verschiedener Typen von Unterwasserlaufkörpern mit verschiedenen Ausbringungsarten abgestellt sind.

8. Verfahren nach einem der Ansprüche 2 bis 7, **dadurch gekennzeichnet, daß** als Wavelet ein Daubechies-Wavelet, vorzugsweise ein Daubechies-Wavelet zweiter Ordnung, verwendet wird.

9. Verfahren nach einem der Ansprüche 1 bis 8, **dadurch gekennzeichnet, daß** zusätzlich im Empfangssignal ein vom Unterwasserlaufkörper nach Starten seines Antriebsaggregats abgestrahltes Antriebsgeräusch und/oder ein von einem akustischen Ortungssonar des Unterwasserlaufkörpers ausgesendeter Schallimpuls detektiert und auf Plausibilität mit dem detektierten Platschgeräusch (Splash) geprüft wird.

10. Verfahren nach einem der Ansprüche 1 bis 9, **dadurch gekennzeichnet, daß** die Detektion des Platschgeräusches (Splash) als Torpedowarnung oder als Torpedovorwarnung in einer Anzeigeeinheit (20) akustisch und/oder visuell dargestellt wird.

11. Verfahren nach einem der Ansprüche 2 bis 10, **dadurch gekennzeichnet, daß** im Zeitpunkt der Überschreitung der Schwelle die absolute Zeit gemessen und angezeigt wird.

12. Verfahren nach einem der Ansprüche 1 bis 11, **dadurch gekennzeichnet, daß** als elektroakustischer Empfänger (10) ein omnidirektionales Hydrofon verwendet wird.

13. Verfahren nach einem der Ansprüche 1 bis 11, **dadurch gekennzeichnet, daß** als elektroakustischer Empfänger (10) eine Hydrofonanordnung mit richtungsselektiven Empfangscharakteristiken verwendet wird.

14. Verfahren nach Anspruch 13, **dadurch gekennzeichnet, daß** der Richtungswinkel der Empfangscharakteristik, in deren Empfangssignal das Platschgeräusch (Splash) detektiert wird, als Peilung (Θ_{UK}) des Unterwasserlaufkörpers ausgegeben und in einer Anzeigeeinheit (20) angezeigt wird.

## Claims

1. Method of detecting air-deployed self-propelled underwater bodies which, after traversing a flight path and/or a falling path in air, enter the water, especially lightweight torpedoes, for which the received signals in an electroacoustic receiver (10) that is immersed in water for the purpose of monitoring its surroundings are subjected to signal processing geared to detecting a splashing sound (splash) caused when the self-propelled underwater body enters the water, **characterized in that** means for discrete wavelet analysis are used for the signal processing.

2. Method according to Claim 1, **characterized in that** the received signal is divided into time periods and each time period is subjected, in a plurality of successive transformation stages, to a discrete wavelet transformation, **in that** a time-dependent product function is formed from the wavelet transforms obtained in all transformation stages and **in that** the time-dependent product function is compared with a threshold (S) and if said threshold is exceeded then detection of the splashing sound is deemed to have occured.

3. Method according to Claim 2, **characterized in that** each transformation stage obtains a wavelet transform in the form of an Approximation time signal containing global information and a Details time signal containing detailed information and **in that** the discrete wavelet transformation is used on the received signal in the first transformation stage and, in each successive transformation stage, on the Details time signal and/or on the Approximation time signal from the respective preceding transformation stage.

4. Method according to Claim 3, **characterized in that**, in order to generate the time-dependent product function of the wavelet transform, the Details time signals and/or the Approximation time signals from all transformation stages are respectively multiplied together point by point.

5. Method according to one of Claims 2 to 4, **characterized in that** the same wavelet is used with increasing scaling factor for the successive wavelet transformations.

6. Method according to Claim 5, **characterized in that** the scaling factor of the wavelet is doubled for each subsequent transformation.

7. Method according to one of Claims 2 to 6, **characterized in that** a multiplicity of sample wavelets are maintained for the wavelet transformation, which are specifically geared to detecting the splashing sounds of different types of self-propelled underwater bodies with different types of yield.

8. Method according to one of Claims 2 to 7, **characterized in that** a Daubechies wavelet, preferably a second-order Daubechies Wavelet, is used as the wavelet.

9. Method according to one of Claims 1 to 8, **characterized in that** drive noise emanating from the self-propelled underwater body after its drive unit is started and/or a sound pulse transmitted by an acoustic locating sonar of the self-propelled underwater body is additionally detected in the received signal and checked for plausibility with the detected splashing sound (splash).

10. Method according to Claims 1 to 9, **characterized in that** the detection of the splashing sound (splash) is presented audibly and/or visually as a torpedo warning or an advance torpedo warning in a display unit (20).

11. Method according to one of Claims 2 to 10, **characterized in that** the absolute time at the time at which the threshold is exceeded is measured and displayed.

12. Method according to one of Claims 1 to 11, **characterized in that** an omnidirectional hydrophone is used as an electroacoustic receiver (10).

13. Method according to one of Claims 1 to 11, **characterized in that** a hydrophone arrangement with directionally selective reception characteristics is used as an electroacoustic receiver (10).

14. Method according to Claim 13, **characterized in that** the directional angle of the reception characteristic in whose received signal the splashing sound (splash) is detected is output as the bearing (θ_{UK}) of the self-propelled underwater body and displayed in a display unit (20).

## Revendications

1. Procédé pour détecter des projectiles sous-marins amenés depuis l'atmosphère qui plongent dans l'eau après avoir parcouru une trajectoire de vol et/ou de chute dans l'atmosphère, notamment des torpilles légères, selon lequel les signaux reçus d'un récepteur électroacoustique (10) utilisé pour la surveillance de son environnement dans l'eau sont soumis à un traitement de signal adapté pour la détection d'un bruit de plongeon (plouf) produit par le plongeon du projectile sous-marin, **caractérisé en ce que** des moyens de l'analyse par ondelettes discrète sont utilisés lors du traitement du signal.

2. Procédé selon la revendication 1, **caractérisé en ce que** le signal reçu est divisé en portions de temps et chaque portion de temps est soumise à plusieurs étapes de transformation successives d'une transformation d'ondelette discrète, **en ce qu'**une fonction de produit dépendante du temps est formée à partir des transformées d'ondelette obtenues dans toutes les étapes de transformation et **en ce que** la fonction de produit dépendante du temps est comparée avec un seuil (S) et la détection du bruit de plongeon est reconnue en cas de dépassement de celui-ci.

3. Procédé selon la revendication 2, **caractérisé en ce que** dans chaque étape de transformation sont obtenus comme transformées d'ondelette un signal de temps approximatif contenant une information globale et un signal de temps détaillé contenant une information détaillée et **en ce que** la transformation d'ondelette discrète est appliquée au signal reçu dans la première étape de transformation et dans chacune des étapes de transformation suivantes au signal de temps détaillé et/ou au signal de temps approximatif de l'étape de transformation précédente respective.

4. Procédé selon la revendication 3, **caractérisé en ce que** pour former la fonction de produit dépendante du temps des transformées d'ondelette, les signaux de temps détaillés et/ou les signaux de temps approximatifs issus de toutes les étapes de transformation sont respectivement multipliés ponctuellement les uns avec les autres.

5. Procédé selon l'une des revendications 2 à 4, **caractérisé en ce que** la même ondelette est utilisée avec un facteur d'échelle croissant lors des transformations d'ondelette successives.

6. Procédé selon la revendication 5, **caractérisé en ce que** le facteur d'échelle de l'ondelette est doublé à chaque transformation suivante.

7. Procédé selon l'une des revendications 2 à 6, **caractérisé en ce qu'**une pluralité de modèles d'ondelette est réservée pour la transformation d'ondelette, lesquels sont spécialement adaptés pour la détection du bruit de plongeon de différents types de projectiles sous-marins avec différents modes de mise à l'eau.

8. Procédé selon l'une des revendications 2 à 7, **caractérisé en ce que** l'ondelette utilisée est une ondelette de Daubechies, de préférence une ondelette de Daubechies de deuxième ordre.

9. Procédé selon l'une des revendications 1 à 8, **caractérisé en ce qu'**un bruit d'entraînement émis par le projectile sous-marin après le démarrage de son groupe de propulsion et/ou une impulsion sonore émise par un sonar de localisation du projectile sous-marin est détecté en plus dans le signal reçu et sa plausibilité avec le bruit de plongeon (plouf) détecté est vérifiée.

10. Procédé selon l'une des revendications 1 à 9, **caractérisé en ce que** la détection du bruit de plongeon (plouf) est représentée de manière sonore et/ou visuelle sur une unité d'affichage (20) sous la forme d'une alerte à la torpille ou d'une pré-alerte à la torpille.

11. Procédé selon l'une des revendications 2 à 10, **caractérisé en ce que** le temps absolu est mesuré et affiché au moment du dépassement du seuil.

12. Procédé selon l'une des revendications 1 à 11, **caractérisé en ce que** le récepteur électroacoustique (10) utilisé est un hydrophone omnidirectionnel.

13. Procédé selon l'une des revendications 1 à 11, **caractérisé en ce que** le récepteur électroacoustique (10) utilisé est un arrangement d'hydrophones ayant des caractéristiques de réception à sélectivité directionnelle.

14. Procédé selon la revendication 13, **caractérisé en ce que** l'angle directionnel de la caractéristique de réception dans le signal reçu de laquelle est détecté le bruit de plongeon (plouf) est délivré comme gisement (θ_{UK}) du projectile sous-marin et affiché sur une unité d'affichage (20).
